# EUROPÄISCHE PATENTANMELDUNG

(11) **EP 4 732 664 A2**
(43) Veröffentlichungstag der Anmeldung: **29.04.2026**
(21) Anmeldenummer: 25205508.2
(22) Anmeldetag: 30.09.2025
(51) Int. Cl.: A01G 24/22

(54) **PFLANZENKULTURSUBSTRAT UND VERFAHREN ZU DESSEN HERSTELLUNG**

(30) Priorität: 01.10.2024 DE 102024128393; 18.11.2024 DE 102024133643
(71) Anmelder: Weber, Ronny Andreas, 47167 Duisburg (DE)
(72) Erfinder: Weber, Ronny Andreas, 47167 Duisburg (DE)
(74) Vertreter: Viering, Jentschura & Partner mbB Patent- und Rechtsanwälte

(57) **Zusammenfassung**

Die vorliegende Erfindung betrifft ein Pflanzenkultursubstrat umfassend Grünschnitt, Nutztiermist und Zellstoff. Die Erfindung betrifft zudem ein Verfahren zur Herstellung dieses Pflanzenkultursubstrats. Zuletzt betrifft die Erfindung auch die Verwendung dieses Pflanzenkultursubstrats unter anderem als wasserspeicherndes und düngendes Torfersatzprodukt in der Landwirtschaft, im Gartenbau oder in der Forstwirtschaft, die Verwendung als losen Baustoff für den Dämmbau und die Verwendung als Dämmstoff. Weiterhin betrifft die Erfindung ein zu Briketts oder Pellets verpresstes Pflanzenkultursubstrat sowie die Verwendung des zu Briketts oder Pellets verpressten Pflanzenkultursubstrats als Brennstoff.

## Beschreibung

Die vorliegende Erfindung betrifft ein Pflanzenkultursubstrat umfassend Grünschnitt, Nutztiermist und Zellstoff. Die Erfindung betrifft zudem ein Verfahren zur Herstellung dieses Pflanzenkultursubstrats. Zuletzt betrifft die Erfindung auch die Verwendung dieses Pflanzenkultursubstrats unter anderem als wasserspeicherndes und düngendes Torfersatzprodukt in der Landwirtschaft, im Gartenbau oder in der Forstwirtschaft, die Verwendung als losen Baustoff für den Dämmbau und die Verwendung als Dämmstoff. Weiterhin betrifft die Erfindung ein zu Briketts oder Pellets verpresstes Pflanzenkultursubstrat sowie die Verwendung des zu Briketts oder Pellets verpressten Pflanzenkultursubstrats als Brennstoff.

### Hintergrund der Erfindung

Weltweit ist der Klimawandel stark zu spüren. Die Dürreperioden nehmen zu und führen zu einem verstärkten Austrocknen von landwirtschaftlichen Nutzflächen sowie Gartenbauflächen. Um dennoch eine gute Wasserversorgung der Pflanzen auf diesen Flächen zu ermöglichen, werden Kultursubstrate eingesetzt, die eine hohe Wasserbindekapazität aufweisen. Gegenwärtig werden im Erwerbsgartenbau, aber auch im Hobbygartenbau (Kleingärten, Blumenerden) Kultursubstrate auf der Rohstoffbasis Torf als Einzelprodukt und in verschiedenen Mischungen eingesetzt.

Kultursubstrate sind "Stoffe, die dazu bestimmt sind, Nutzpflanzen als Wurzelraum zu dienen und die dazu in Böden eingebracht, auf Böden aufgebracht oder in bodenunabhängigen Anwendungen genutzt werden" (§ 2 Nr. 8, Düngegesetz). In Kultursubstraten ist der Gehalt an Nährstoffen weniger wichtig als der Salzgehalt oder der pH-Wert, welche einen starken Einfluss auf die Keimfähigkeit und auf das Wurzelwachstum von Pflanzen haben. Daher unterscheidet sich auch die Deklaration von Kultursubstraten von der der Düngemittel (vgl. § 2 Nr. 1 und §2 Nr. 8 Düngegesetz).

Torf entsteht in Mooren durch Zersetzung von pflanzlichen Substanzen und stellt einen dunkelbraunen bis schwarzen Boden von faseriger Beschaffenheit dar. Der Torf hat bei der Anwendung im Garten- und Pflanzenbau wegen seiner vielen Luftporen, seiner großen Pufferkapazität, der Strukturstabilität, seiner Wasserbindekapazität, des geringen Volumengewichtes und anderer positiver Eigenschaften eine entsprechend hohe Bedeutung und Beliebtheit erlangt. Seinen Ruf als perfekte Gartenerde hat Torf allerdings eingebüßt. Heute steht der Substrat-Klassiker in der Kritik als umweltschädlich und zerstörerisch.

Die Tatsache, dass es sich bei natürlichem Torf um eine endliche Ressource handelt, die ebenso wie andere fossile Brennstoffe einen für das weltweite Ökosystem wichtigen Kohlenstoffspeicher darstellt und darüber hinaus in Form von Torfmooren einzigartige Lebensräume für feuchtgebietsabhängige Pflanzen und Tiere bereitstellt, bedingt die Notwendigkeit der Herstellung von Alternativprodukten.

Die DE 30 24 737 B1 betrifft ein Substrat für Bepflanzungen bestehend aus einer Torf enthaltenden Mischung, Rindenkompost und abgetragenes, mit Mikroorganismen besiedeltes Kultursubstrat. Dieses Substrat hat eine gute Strukturstabilität und eine hohe Konstanz des pH-Wertes zwischen 5,5 und 6,5.

Die DE 40 41 329 A1 betrifft ein Verfahren zum Herstellen eines Torfersatzstoffes aus pflanzlichen Roh- und Abfallstoffen, insbesondere der Forst- und Landwirtschaft. Dabei werden die Roh- und Abfallstoffe in einer Schneckenpresse thermomechanisch aufgeschlossen und zerfasert und zusammen mit mineralischen und organischen Zuschlagsstoffen gemischt.

Der vorliegenden Erfindung liegt die Aufgabe zugrunde, den Stand der Technik zu verbessern oder eine Alternative zu bieten.

### Zusammenfassung der Erfindung

Nach einem ersten Aspekt der vorliegenden Erfindung löst die gestellte Aufgabe ein Pflanzenkultursubstrat umfassend: a. Zerkleinerter und getrockneter Grünschnitt, b. zerkleinerter und getrockneter Nutztiermist, und c. Zellstoff, wobei der der Nutztiermist ausgewählt ist aus der Gruppe bestehend aus Rindermist, Pferdemist, Schweinemist, Schafsmist und Ziegenmist oder Mischungen hiervon.

Die Ausgangsmaterialien des Pflanzenkultursubstrats sind kostengünstig, liegen in ausreichender Menge vor und bieten eine nachhaltige und ökologisch sinnvolle Quelle für die Herstellung des Kultursubstrats.

Gerade die Menge an Grünschnitt und Mistabfall sind in den vergangenen Jahren stetig gestiegen, und zwar in einem solchen Maße, dass diese nicht vollständig verwertet werden.

Während ein Teil davon beispielsweise kompostiert wird oder zur Energiegewinnung verwendet wird, wird ein großer Teil lediglich deponiert und nicht weiter verwertet.

Als Grünschnitt werden im Rahmen der vorliegenden Anmeldung geschnittene, wenig oder nicht verholzte Pflanzenreste bezeichnet, wie sie vielfach als Abfall beim Mähen oder beim Schnitt in der Garten-, Landschafts-, Straßenrand- und Waldpflege anfallen. Die Spanne der Pflanzen reicht von Gräsern und Kräutern über Grünsträucher bis hin zu Grünholz wie Astwerk mit einem hohen Anteil an Blättern (Laub) und saftführender Rinde (z. B. Waldrestholz oder Durchforstungsabfall). Der Grünschnitt wird erfindungsgemäß geschnitten und getrocknet, aber keinem weiteren chemischen Aufschluss unterzogen, so dass er nicht mit einem Zellstoff gleichzusetzen ist.

Der Begriff "Pferdemist" ist im Rahmen der Anmeldung definiert als Rückstände aus der Pferdehaltung, die in der Hauptsache aus den Exkrementen der Tiere bestehen.

Als Zellstoff bezeichnet man die beim chemischen Aufschluss von Pflanzenfasern entstehende faserige Masse, die überwiegend aus Cellulose besteht. Zellstoff enthält idealerweise nur geringe Anteile an Hemizellulose und Lignin, wobei diese Bestandteile im Herstellungsprozess weitgehend entfernt oder reduziert werden. Die Herstellung von Zellstoff erfolgt regional unterschiedlich aus Industrierestholz oder Plantagenholz. In Europa und Nordamerika wird beispielsweise Sägerestholz (meist Nadelholz) verwendet. In Südamerika, Südafrika und Australien wird oft Laubholz aus Waldplantagen (schnellwachsender Eukalyptus) eingesetzt. Das Holz wird zunächst entrindet und dann zu geschnitzeltem Holz (Hackschnitzel) verarbeitet. Anschließend wird das Holz chemisch aufgeschlossen. Vorherrschend ist hierbei das alkalische Sulfat-Verfahren, mit dem über 95 % der Weltproduktion hergestellt werden. Sowohl Laub- als auch Nadelholz kann verwendet werden. Daneben gibt es das saure Sulfit-Verfahren. Nur noch 2 % bis 3 % werden nach diesem Verfahren hergestellt. Der Aufschluss von stark harzhaltigem Holz, wie Kiefernholz, ist hierbei selten. Meist wird Fichten-, Buchen- oder Eukalyptusholz verwendet. Es wird qualitativ zwischen Nadelholz- und Laubholzzellstoff unterschieden. Nadelholz-Sulfatzellstoff hat lange, feste Fasern von durchschnittlich 3,3 mm Länge und gibt Papier dadurch eine Armierung. Laubholz-Zellstoff hat kürzere Fasern von etwa 1 mm Länge.

Der Zellstoff der Erfindung grenzt sich damit von einer Hemizellulose ab, die ein Gemisch von Polysacchariden in veränderlicher Zusammensetzung betrifft, wobei die am häufigsten vorkommenden Monomere Pentosen, wie D-Xylose und L-Arabinose sind. Der Zellstoff der Erfindung stellt damit auch keinen Hemizellulose-haltigen Bestandteil dar, der beispielsweise ausgewählt sein kann aus Holz, bevorzugt Hack- und Holzfasern; Stroh, Gras, Grünabfall, und/ oder pflanzlichen Verarbeitungsrückständen.

Im Unterschied zur Hemizellulose, die im erfindungsgemäßen Sinne als ein Gemisch aus Polysacchariden verstanden wird und neben der Cellulose einen integralen Bestandteil pflanzlicher Zellwände bildet, zeichnet sich Zellstoff durch eine signifikant höhere Reinheit an Cellulose aus. Während hemizellulosehaltige Bestandteile wie Hack- oder Holzfasern, Stroh, Gras, Grünabfälle oder pflanzliche Verarbeitungsrückstände als Strukturmaterial vorteilhaft eingesetzt werden können, dient Zellstoff primär als funktionelles Trägermaterial mit hohem Reinheitsgrad an Cellulose, z. B. in der Papierherstellung, der Chemie oder als Basis für biobasierte Werkstoffe.

Damit entspricht der Zellstoff der Erfindung nicht dem zerkleinerten und getrockneten Grünschnitt.

Sowohl Grünschnitt als auch Nutztiermist liegen dabei im erfindungsgemäßen Erzeugnis zerkleinert und getrocknet vor. Durch diese Vorverarbeitungsschritte erlangen die einzelnen Materialien ihre positiven Eigenschaften, die dann im erfindungsgemäßen Pflanzenkultursubstrat kombiniert vorliegen.

Das erfindungsgemäße Pflanzenkultursubstrat hat eine hohe Wasserbindekapazität und ist dazu in der Lage das Wasser zu speichern und kontrolliert abzugeben. Dies macht das erfindungsgemäße Pflanzenkultursubstrat besonders geeignet für die Verwendung in trockenen Gebieten oder bei langanhaltenden Dürreperioden. Da die Dürreperioden im Zuge des Klimawandels im Mittel an Dauer zunehmen, stellt das erfindungsgemäße Pflanzenkultursubstrat somit auch für die Zukunft ein geeignetes Kultursubstrat dar.

In der Regel wird eine Pflanze (egal ob jung oder alt) mit ihrem Wurzelwerk (bzw. deren Samen) zur Anzucht in ein entsprechendes Kultursubstrat gesetzt. Dieses Kultursubstrat (geeignete Erde) wird nach dem Einsetzen bzw. Einsäen mit Wasser gegossen und dies bevorzugt in regelmäßigen Abständen. Bei nicht regelmäßigen Abständen trocknet das Kultursubstrat aus und die Oberflächen der Substrate verdichten sich und ziehen sich zusammen, so dass eine erneute Wasseraufnahme nur schwer gelingt. Generell stellt sich das Problem, dass das das Wasser schneller verdunstet oder vorbeifließt, als die Pflanze oder die Erde es aufnehmen kann. Aus diesem Grund muss mehr Wasser hinzugefügt werden als pflanzenseitig notwendig ist. In kontrollieren Anbauflächen (wie bspw. Gewächshäusern) wird der Feuchtegehalt der Kultursubstrate dauerhaft kontrolliert und entsprechend nachgewässert. Diese verwendeten Erden haben typischerweise nur eine geringe Wasseraufnahme und Speicherfähigkeit, wodurch das Wasser immer wieder hinzugefügt werden muss. Bei Torf besteht die Gefahr einer Überwässerung der Pflanze. Durch das erfindungsgemäße Kultursubstrat wird der Wasserverbrauch um ca. 50 % gesenkt, da dieses Kultursubstrat als effektiver Wasserspeicher fungiert und eine Verdunstung des Wassers erschwert wird. Gleichzeitig kann das gespeicherte Wasser dann im Erdreich an die wasserbedürftigen Pflanzen abgegeben werden.

Des Weiteren stellt das erfindungsgemäße Pflanzenkultursubstrat aufgrund seiner Zusammensetzung aus Nutztiermist und Grünschnitt eine Quelle für eine Vielzahl an Nährstoffen dar, wie beispielsweise Stickstoff, Phosphor, Kalium, Calcium und Magnesium. Neben seiner Eigenschaft als Kultursubstrat weist das erfindungsgemäße Erzeugnis somit auch vorteilhafte Düngeeigenschaften auf. Durch Zugabe von Düngemitteln in das Pflanzenkultursubstrat (z.B. Depotdünger) kann die Düngerwirkung des Pflanzenkultursubstrats gezielt erhöht werden und dem Boden Nährstoffe zugefügt werden.

Durch den Gehalt an Nutztiermist und den Garten-Abfallprodukten werden die Bodenflächen mit den notwendigen Nährstoffen versorgt. Durch die Aufnahme von Wasser wird zudem der biologische Zersetzungsprozess aktiviert, bei denen Nährstoffe freigesetzt werden, die im Boden für das Pflanzenwachstum nutzbar gemacht werden.

Durch das Kultursubstrat werden dem Boden organische Kohlenstoffverbindungen zugefügt, die die Bodeneigenschaften insbesondere von Kohlenstoffarmen Böden erheblich verbessern kann.

Die Aufnahme von CO₂ aus der Umgebung und die entsprechende Umwandlung in organische Kohlenstoffverbindungen kann durch die Zugabe von Algen und insbesondere von Grünalgen zu dem Kultursubstrat erhöht werden. Durch die Zugabe von Algen und insbesondere von Grünalgen zu dem Kultursubstrat kann die Aufnahme von CO₂ aus der Umgebung und die entsprechende Umwandlung in organische Kohlenstoffhaltige Verbindungen als Biomassenaufbau angeregt werden.

Vorzugsweise kann es sich bei den Algen um Mikroalgen, Salzwasseralgen oder Süßwasseralgen oder -arten oder um Mischungen davon handeln.

Vorzugsweise kann es sich bei den Algen um mindestens eine aus der Gruppe der Grünalgen, Rotalgen, Goldalgen, Braunalgen, goldbraunen Algen, Blaualgen oder Blaugrünalgen, asiatischen Flachalgen oder Seegras oder deren Arten und Mischungen davon handeln.

Vorzugsweise können die Algen mindestens eine der folgenden Arten sein: Cyanobakterien (Cyanophyta), Ochrophyten, Glaucophyten, Pyrrophyten, Rhodophyten, Chrysophyta, Raphidophyten, Eustigmatophyten, Synurophyten, Silicoflagellaten, Sarcinochrysophyceae, Heterokonten, Crytophyten, Haptophyten, Euglenophyten, Chlorophyten, Charophyten, Landpflanzen, Embrophyta oder Chlorarachniophyten oder Arten und Mischungen davon.

Vorzugsweise können die Algen aus mindestens einer der Familien Bryopsidaceae, Acrotylaceae, Areschougiaceae, Phaeophyceae, Cystocloniaceae, Dicranemataceae, Hypneaceae, Raphidiophyceae, Eustigmatophyceae, Dumontiaceae, Caulerpaceae, Codiaceae ausgewählt werden, Halimedaceae, Udoteaceae, Anadyomenaceae, Polyphysaceae, Siphonocladaceae, Valoniaceae, Ulvaceae, Chordariaceae, Punctariaceae, Dictyotaceae, Ectocarpaceae, Rhodymeniaceae, Gelidiaceae, Cystoseiraceae, Sargassaceae, Sporochnaceae, Sphacelariaceae, Scytosiphonaceae, Sarcinochrysophyceae, Alariaceae, Gracilariaceae, Rhizophyllidaceae, Porphyridiaceae, Acrochaetiaceae, Bonnemaisoniaceae, Ceramiaceae, Dasyaceae, Rhodomelaceae, Delesseriaceae, Phacelocarpaceae, Halymeniaceae, Liagoraceae, Chrysomonadales, Chrysocapsales, Chrysosphaerales, Chrysotrichales, Heterokontae, Diatomeae, Galaxauraceae, Plocamiaceae, Champiaceae, Sebdeniaceae, Lomentariaceae, Peyssonneliaceae, Nizymeniaceae, Kallymeniaceae, Corallinaceae, Nemastomataceae, Xanthophyceae oder Arten und Mischungen davon.

Vorzugsweise kann es sich bei den Algen um Spirulina, Arthrospira, Chlorella, Anabaena, Scenedesmus, Aphanizomenon, Dunaliella, Phymatolithion, Lithothamnium, Ascophyllum oder Arten und Mischungen davon sein. Gemäß einer weiteren Ausführungsform kann es sich bei den Algen um Spirulina Plantensis, Spirulina Maxima, Anabaena Cylindrica, Scenedesmus Obliquus, Ascophyllum Nodosum, Phymatolithion calcereum, Lithothamnium calcereum, Aphanizomenon Flos-Aquae, Dunaliella Salina oder andere und Mischungen davon. Besonders bevorzugt ist die Verwendung von Chlorella-Algen.

Der Fachmann weiß jedoch, dass es möglich ist, jede andere in der Technik bekannte Alge aus einer anderen Gattung/Art zu verwenden, ohne vom Anwendungsbereich der Erfindung abzuweichen.

Die Algen sind in einem Konzentrationsbereich von mindestens 2 % vorhanden. Vorzugsweise liegen die Algen in einer Konzentration von mindestens 5 Gew.-% der Gesamtzusammensetzung vor. Vorzugsweise liegen die Algen in einem Konzentrationsbereich von mindestens 10 Gew.-% der Gesamtzusammensetzung vor. Vorzugsweise sind die Algen in einem Bereich von mindestens 15 Gew.-% der Gesamtzusammensetzung vorhanden. Vorzugsweise sind die Algen in einem Bereich von mindestens 20 Gew.-% der Gesamtzusammensetzung vorhanden. Vorzugsweise liegt der Anteil der Algen im Bereich von mindestens 30 Gew.-% der Gesamtzusammensetzung. Besonders bevorzugt liegt der Anteil der Algen im Bereich von mindestens 40 oder 50 oder 60 Gew.-% der Gesamtzusammensetzung.

Es werden hier 5 verschiedene Gewichtsbereiche gelehrt, die alle als vorzugsweise eingestuft sind. Der Fachmann kann das Mischungsverhältnis von Algen und Substrat an die jeweiligen Anforderungen anpassen.

In Verbindung mit der Verwendung hat es sich als vorteilhaft herausgestellt, wenn das Pflanzenkultursubstrat zusätzlich eine Verbindung oder Zusammensetzung mit hoher Wasserspeicherkapazität, wie beispielsweise ein Hydrogel bildendes natürliches und/oder synthetisches, vernetztes und/oder teilvernetztes Polymer und/oder Copolymer verwendet werden.

Es ist bekannt, dass vernetzte Polyacrylsäuren und/oder Copolymere auf der Basis von Polyacrylsäure und Polyacrylamid, in der einschlägigen Fachliteratur unter dem Oberbegriff der Polyacrylat und Polyacrylamid basierten Superabsorbern beschrieben, insbesondere in ihrer Salzform, in der Lage sind, ein Vielfaches ihres Eigengewichtes an Wasser, wässrigen Flüssigkeiten und auch Öl-Wasser-Dispersionen und/oder Suspensionen aufzunehmen und unter Ausbildung von Hydrogelen zu binden. Polyacrylsäure ist eine farblose Substanz, die sich gut in Wasser löst. Die Glasübergangstemperatur liegt bei >100°C. Oberhalb von 200°C bis 250°C verliert das Polymer Wasser, wobei unlösliche vernetzte Anhydride entstehen. Ab ca. 350°C kommt es zur Zersetzung zu Kohlendioxid und Kohlenwasserstoffen.

Für die Herstellung von Polyacrylsäure können verschiedene Verfahren genutzt werden, meist die Lösungspolymerisation in Wasser, die Fällungs- oder die Emulsionspolymerisation, aber auch die Hydrolyse von Acrylsäure-Derivaten (Ester, Nitrile, Amide) hat eine größere Bedeutung erlangt. Ein besonders großes Eigenschaftsspektrum ist durch Copolymerisation mit anderen Comonomeren möglich. Polyacrylsäure wird als Handelsprodukt in der Säure- oder Salzform angeboten.

Vernetzte oder teilvernetzte Polyacrylsäuren als Kalium- oder Natriumsalz der Polyacrylsäure werden vorzugsweise als extrem Flüssigkeit aufsaugender, so genannte superabsorbierende Polymere (nachstehend als SAP oder Superabsorber bezeichnet) eingesetzt, beispielsweise in Babywindeln oder Damenbinden. Weitere Anwendungen liegen in der Verpackung feuchtigkeitsempfindlicher oder Flüssigkeit absondernder Lebensmittel oder als Gel-Bildner in der Arzneimittelherstellung. Das SAP liegt für alle genannten Verwendungen in vernetzter und/oder teilvernetzter Form vor. Die Vernetzung ist notwendig, um die Unlöslichkeit des SAP in Wasser zu gewährleisten. Die Lücken und Hohlräume des Netzwerkes werden durch Wasser ausgefüllt. Dadurch entsteht ein Hydrogel. Bevorzugt ist die Verwendung des Kalium-Acrylats.

Superabsorber können ein Vielfaches ihres Eigengewichtes an Wasser absorbieren, wobei sie zu einem Hydrogel aufquellen. Polymerketten, vor allem von Polyacrylsäure, werden durch vereinzelte kovalente Bindungen untereinander verknüpft. Diese leichte Vernetzung ist notwendig, um die Unlöslichkeit des SAP in Wasser zu gewährleisten. Hydrogel ist ein in Wasser oder in wässrigen Flüssigkeiten gequollenes, hydrophiles polymeres Netzwerk. Die Eigenschaften dieser Gele sind abhängig von der Wechselwirkung zwischen Netzwerk und der umgebenden Flüssigkeit. In ionischen Gelen muss der osmotische Beitrag der ionischen Gruppen berücksichtigt werden, der großen Einfluss auf die Quelleigenschaften der Gele hat.

Zum Beispiel sind in einem Polyacrylsäure-Gel die Acrylsäure-Gruppen in unmittelbarer Nachbarschaft zueinander angeordnet. Die gleichen Ladungen der dissoziierten CarboxylatGruppen stoßen sich ab, die polymeren Ketten strecken sich und das Gel quillt in extremer Weise an. Solche Netzwerke können bis zu 1000gr Wasser pro 1gr Polymer aufnehmen. Aufgrund dieser Produkteigenschaften werden vernetzte Polyacrylsäuren als Superabsorber bezeichnet.

Das Kultursubstrat wird bei dieser Ausführungsform mit Hydrogel bildenden Polymer im Gewichtsverhältnis von 1:4 bis 4:1, bevorzugt im Gewichtsverhältnis von 1:3 bis 3:1, besonders bevorzugt im Gewichtsverhältnis von 1:2 bis 2:1 und insbesondere im Gewichtsverhältnis von 1:1 gemischt.

Zusätzlich wird das Pflanzenkultursubstrat mit einer (bevorzugt als getrocknetes Pulver vorliegenden) Alge, die insbesondere eine Grünalge wie bspw. Chlorella ist, gemischt.

Derart getrocknete Algen mit einer Restfeuchte von 10 - 15 % sind im Ruhemodus und können durch Wasserzugabe wieder reaktiviert werden. Wie die Erfinder herausgestellt haben, bildet das Hydrogel bildende Polymer in Verbindung mit den weiteren Inhaltsstoffen des Pflanzenkultursubstrats ein sehr gutes Substrat für die Algen, die durch die Photosynthese das CO2 aus der Atmosphäre aufnehmen und in organische Kohlenstoffverbindungen umwandeln.

Somit wird durch diesen Aspekt der Erfindung ein Kultursubstrat bereitgestellt, das bei Verwendung im privaten ober im gewerblichen Bereich ein effektives Produkt darstellt, um dem Klimawandel entgegenzuwirken, insofern es ein Produkt darstellt, das atmosphärisches Kohlenstoffdioxid binden kann und damit zu einer Verringerung von klimaschädlichen Gasen beiträgt.

Im Ergebnis wird somit ein Torfersatzprodukt zur Verfügung gestellt, dass sich durch eine hohe Wasserbindekapazität und einen hohen Gehalt an Pflanzennährstoffen auszeichnet. Das erfindungsgemäße Pflanzenkultursubstrat ist somit nicht nur lediglich ein Torfersatzprodukt, sondern vielmehr gleichzeitig auch ein Düngemittel. Somit kann der beim Ausbringen von gewöhnlichem Kultursubtrat anfallende zusätzliche Schritt des Düngerausbringens entfallen, wodurch zum einen Material und zum anderen Arbeit eingespart werden kann.

Neben der Verwendung als Torfersatzprodukt in der Landwirtschaft, im Gartenbau oder in der Forstwirtschaft, eignet sich das erfindungsgemäße Erzeugnis auch als loser Baustoff für den Dammbau, als Brennstoff oder als Dämmstoff. Es ergibt sich somit ein vielfältig einsetzbares Erzeugnis.

Durch die zusätzliche Zugabe von Düngemittel kann der Düngewert des Substrats stark erhöht werden, und dem mit Düngermittel angereichertem Substrat eine höhere Düngefunktion zugesprochen werden. Des Weiteren kann dem Substrat Saatgut hinzugefügt werden, so dass es zusammen mit dem Saatgut aufgebraucht der Bodenbegrünung oder der Ansaat von Nutzpflanzen dienen kann.

### Die Erfindung im Einzelnen

Das erfindungsgemäße Pflanzenkultursubstrat umfasst zerkleinerten und getrockneten Grünschnitt, zerkleinerten und getrockneten Nutztiermistmist sowie Zellstoff. Bevorzugt besteht das erfindungsgemäße Pflanzenkultursubstrat im Wesentlichen aus diesen drei Bestandteilen, wobei es besonders bevorzugt ist, wenn das erfindungsgemäße Pflanzenkultursubstrat ausschließlich aus diesen drei Bestandteilen besteht. "Im Wesentlichen" bedeutet vorliegend, dass ein gewisser Teil des Pflanzenkultursubstrats aus weiteren Bestandteilen bestehen kann, wobei diese weniger als 10 Gew%, bevorzugt weniger als 7,5 Gew%, besonders bevorzugt weniger als 5 Gew% und insbesondere bevorzugt weniger 2,5 Gew% bezogen auf das Gesamtgewicht des Pflanzenkultursubstrats ausmachen. Beispiele für weitere Bestandteile können Additive, wie beispielsweise Zuschlagsstoffe, oder Verunreinigungen sein.

Additive gemäß der vorliegenden Erfindung können Hilfsstoffe sein, die unter anderem die Eigenschaften des erfindungsgemäßen Pflanzenkultursubstrats optimieren können, wie beispielsweise erhöhte Lagerstabilität. Im Gegensatz dazu stellen Zuschlagstoffe gemäß der vorliegenden Erfindung Bestandteile dar, die keine primären Funktionsträger des Pflanzenkultursubstrats sind, wie beispielsweise Füllstoffe. Dem Fachmann ist weiterhin geläufig, dass bei den Ausgangsmaterialien Verunreinigungen vorliegen können, die unter Aufwand entfernt werden müssen. Bevorzugt kann daher ein gewisser Bestandteil des Pflanzenkultursubstrats aufweisen, insbesondere wenn diese Verunreinigungen nicht toxisch sind und die Eigenschaften des Pflanzenkultursubstrats nicht negativ beeinflussen.

Die Adjektive "zerkleinert und getrocknet" von den Merkmalen Grünschnitt und Nutztiermist sind nicht so zu verstehen, dass sie eine Reihenfolge der Prozessierung dieser Materialien vorgeben. Somit kann der erfindungsgemäße Grünschnitt zuerst getrocknet und dann zerkleinert worden sein oder alternativ zuerst zerkleinert und anschließend getrocknet worden sein. Auch ein gleichzeitiges Trocknen und Zerkleinern ist denkbar. Entsprechend kann auch der Nutztiermist zuerst getrocknet und dann zerkleinert worden sein oder alternativ zuerst zerkleinert und anschließend getrocknet worden sein. Auch hier sind ein gleichzeitiges Trocknen und Zerkleinern denkbar.

Vorteilhafterweise kann bei dem erfindungsgemäßen Pflanzenkultursubstrat vorgesehen sein, dass der Grünschnitt ein nicht-kompostierter Grünschnitt ist und ausgewählt ist aus der Gruppe bestehend aus Grasschnitt, Laub, Gehölz, Heckenschnitt und Kombinationen hieraus.

Bevorzugt ist der nicht-kompostierte Grünschnitt nicht älter als 6 Wochen. Innerhalb dieses Zeitraums kann gewährleistet werden, dass noch kein nennenswerter Kompostiervorgang stattgefunden hat. Die Verwendung von nicht-kompostiertem Grünschnitt hat den Vorteil, dass ein Großteil der Nährstoffe wie Stickstoff, Phosphor und Kalium erhalten bleiben, die ansonsten im Zuge des Kompostierens ausgewaschen werden. Somit weist das erfindungsgemäße Pflanzenkultursubstrat einen hohen Gehalt an Pflanzennährstoffen auf.

Weiterhin kann nicht-kompostierter Grünschnitt kostengünstig von Entsorgungsunternehmen, Wirtschaftsbetrieben und Verbrennungsanlagen erhalten werden und liegt in ausreichender Menge vor. Da ein Großteil des Grünschnitts nicht-verwertet auf Deponien liegt, ist dessen Verwendung für das erfindungsgemäße Pflanzenkultursubstrat nachhaltig und ökologisch sinnvoll.

Während generell jede Art von Grünschnitt für die vorliegende Erfindung verwendet werden kann, haben sich insbesondere Grasschnitt, Laub, Gehölz, Heckenschnitt und Kombinationen hieraus als besonders vorteilhaft erwiesen.

Gemäß einer weiteren Ausführungsform weist der zerkleinerte und getrocknete Grünschnitt und/oder der zerkleinerte und getrocknete Nutztiermist eine Restfeuchte von maximal 15 Gew% und eine Körnung von weniger als 8 mm auf.

Die Körnung des Grünschnitts und des Nutztiermists, der bevorzugt Pferdemist ist, liegt vorteilhaft unterhalb von 10 mm. Bei einer solch geringen Körnung liegen Grünschnitt und Nutztiermist größtenteils in faseriger Form vor, durch die besonders gut Wasser gebunden werden kann. Weiterhin sind die im Grünschnitt und Nutztiermist enthaltenen Nährstoffe bei dieser geringen Körnung besonders einfach verfügbar für die Pflanzen. Die Körnung kann somit unterhalb von 9 mm, 8 mm, 7 mm, 6 mm, 5 mm, 4 mm, 3 mm, 2 oder 1 mm liegen.

Bei länglichen Strukturen (wie Halme, Zweige oder Fasern) mindestens 6 mm im Durchmesser aufweisen und eine Länge von mindestens drei bis vier cm aufweisen.

Die geringe Restfeuchte von maximal 15 Gew% gewährleistet eine hohe Lagerstabilität. Insbesondere der Grünschnitt kann sich bei Restfeuchten jenseits der 15 Gew% unerwünscht weiter zersetzen. Die Restfeuchte kann somit auch bei maximal 14 Gew%, bei 13 Gew%, bei 12 Gew%, bei 11 Gew% oder 10 Gew% liegen.

In einer bevorzugten Ausführungsform liegt die Restfeuchte nicht unter 10 Gew.%, da dann das Kultursubstrat unter Staubbildung zerfällt. Das Kultursubstrat kann also entsprechend eine Restfeuchte von 10 bis 15 Gew.% aufweisen.

Weiterhin wird durch die geringe Restfeuchte eine hohe Wasserbindekapazität sowohl des Grünschnitts als auch des Nutztiermists ermöglicht.

Gemäß einer anderen Ausführungsform ist der Pferdemist ein strohhaltiger Pferdemist. Das zerkleinerte Stroh weist ebenfalls eine faserige Form auf, die besonders geeignet ist Wasser zu binden.

Gemäß einer Ausführungsform ist bei dem Nutztiermist, der bevorzugt Pferdemist ist, diverse Einstreumaterialien denkbar, so kann es Stroh, Heu, Holzpellets, Holzspäne, Waldboden oder ein Gemisch hiervon enthalten.

Gemäß einer alternativen Ausführungsform ist der Nutztiermist ein Nutztiermist ohne Strohanteil. Auch ohne Strohanteil weist der zerkleinerte und getrocknete Nutztiermist, der bevorzugt ein Pferdemist ist, eine gute Wasserbindekapazität auf.

Pferdemist kann insbesondere von Gestüten oder Reiterhöfen erworben werden. Innerhalb der Pferdeställe liegt häufig Stroh für die Pferde aus, sodass beim Ausmisten des Stalls zwangsweise Stroh im Pferdemist enthalten ist. Pferdemist fällt jedoch auch außerhalb des Stalls an, sodass Gestüte und Reiterhöfe häufig beide Arten von Pferdemist vorrätig haben. Vorteilhafterweise können beide Arten für das erfindungsgemäße Pflanzenkultursubstrat verwendet werden, sodass keine besonderen Anforderungen hinsichtlich des Stroh-Reinheitsgrades vorliegen.

Vorteilhafterweise ist der Zellstoff ein nördlicher gebleichter Langfaser-Sulfatzellstoff (NBSK-Zellstoff) und hat eine Faserlänge von zwischen 4 und 20 mm.

Während erfindungsgemäß jeder Zellstoff für das Pflanzenkultursubstrat geeignet ist, stellt NBSK-Zellstoff mit einer Faserlänge von zwischen 4 und 20 mm einen besonders geeigneten Zellstoff dar. NBSK-Zellstoffzeichnet sich durch eine hohe Reinheit, eine hohe Faserlänge und einem großen Faserdurchmesser aus. Mit seinen langen und dicken Fasern eignet sich NBSK-Zellstoff insbesondere als Struktur-verstärkende Faser.

Gemäß einer vorteilhaften Ausführungsform haben die drei Mischungskomponenten zerkleinerter und getrockneter Grünschnitt; zerkleinerter und getrockneter Nutztiermist und Zellstoff im Wesentlichen gleiche Volumenanteile.

Hierbei bedeutet im Wesentlichen, dass die Volumenanteile um weniger als 20 Vol%, bevorzugt um weniger als 10 Vol%, weiter bevorzugt um weniger als 5 Vol% und insbesondere bevorzugt um weniger als 1 Vol% voneinander abweichen. Die Volumenanteile können um weniger als 20 Vol%, 19 Vol%, 18 Vol%, 17 Vol%, 16 Vol%, 15 Vol%, 14 Vol%, 13 Vol%, 12 Vol%, 11 Vol%, 10 Vol%, 9 Vol%, 8 Vol%, 7 Vol%, 6 Vol%, 5 Vol%, 4 Vol%, 3 Vol%, 2 Vol% oder 1 Vol% voneinander abweichen. Insbesondere vorteilhaft ist es, wenn die Volumenanteile einander entsprechen (1 Volumen zerkleinerter und getrockneter Grünschnitt :
1 Volumen zerkleinerter und getrockneter Nutztiermist : 1 Volumen Zellstoff).

In einer bevorzugten Ausführungsform umfasst das Pflanzenkultursubstrat:
- 20 bis 40 Vol% zerkleinerter und getrockneter Grünschnitt,
- 20 bis 40 Vol% zerkleinerter und getrockneter Nutztiermist, und
- 20 bis 40 Vol% Zellstoff.

Bei einer algenhaltigen Ausführungsform umfasst das Pflanzenkultursubstrat bevorzugterweise:
- 15 bis 30 Vol% zerkleinerter und getrockneter Grünschnitt,
- 15 bis 30 Vol% zerkleinerter und getrockneter Nutztiermist, und
- 15 bis 30 Vol% Zellstoff;
- 10 bis 55 Vol% Algen.

Ferner ist denkbar, dass das Pflanzenkultursubstrat zu Pellets, Briketts oder Matten verpresst wird.

Je nach Einsatzgebiet eignen sich verschiedene Formen des Pflanzenkultursubstrats. Bei der Verwendung als Dämmstoff wird die Mattenform bevorzugt, während bei der Verwendung als Brennstoff insbesondere die Pellet- oder Brikettform bevorzugt wird.

In einem zweiten Aspekt betrifft die Erfindung ein Verfahren zur Herstellung des erfindungsgemäßen Pflanzenkultursubstrats umfassend die folgenden Schritte:
a. Bereitstellen von Grünschnitt,
b. mechanische Zerkleinerung des Grünschnitts,
c. Endtrocknung des zerkleinerten Materials bis zu einer Restfeuchte von maximal 15 Gew% zum Erhalten des getrockneten und zerkleinerten Grünschnitts,
d. Bereitstellen von Nutztiermist,
e. mechanische Zerkleinerung des Nutztiermists,
f. Bei strohhaltigem Nutztiermist Vermischung der Exkrement-Anteile mit den Strohanteilen des mechanisch zerkleinerten Nutztiermists, und Aufmischen unter Bildung eines mattenförmigen Nutztiermistsubstrats,
g. Endtrocknung des mechanisch zerkleinerten Nutztiermists aus Schritt e. oder dem mechanisch zerkleinerten strohhaltigen Nutztiermist aus Schritt f. bis zu einer Restfeuchte von maximal 15 Gew% zum Erhalten des getrockneten und zerkleinerten Nutztiermists oder des getrockneten und zerkleinerten strohhaltigen Nutztiermists,
h. Bereitstellen von Zellstoff,
i. Vermischen des getrockneten und zerkleinerten Grünschnitts aus Schritt c. mit dem getrockneten und zerkleinerten Nutztiermist oder dem getrockneten und zerkleinerten strohhaltigen Nutztiermist aus Schritt g. und dem Zellstoff aus Schritt h. und homogene Durchmischung zum Erhalten des Pflanzenkultursubstrats, wobei optional zusätzlich Algen und/oder ein Hydrogel bildendes Polymer hinzugegeben werden,
wobei der Nutztiermist bevorzugt ein Pferdemist ist.

Aufgrund der unterschiedlichen Zusammensetzung des Grünschnitts und des Nutztiermists sowie deren unterschiedliche Lagerung vor deren Erwerb variieren deren Parameter wie Körnung und Feuchtigkeit. Um einerseits eine homogene Größenverteilung zu gewährleisten und andererseits eine gute Wasserbindekapazität und Nährstofffreisetzung zu erzielen, ist erfindungsgemäß eine mechanische Zerkleinerung dieser beiden Ausgangsmaterialien vorgesehen. Diese kann abhängig vom Ausgangsmaterial beispielsweise mit Einwellen-Zerkleinerern, Zweiwellen-Zerkleinerern, Dreiwellen-Zerkleinerern, Zweiwellen-Reißern, Schneidwerkzeug, Hammermühlen, Schneidwerkzeug mit Hammermühlen, Lochscheibenmühlen, Korundscheibenmühlen, Zahnkolloidmühlen oder mit Häckslern erfolgen.

Dabei ist es bei der mechanischen Zerkleinerung des Grünschnitts in Schritt b. bevorzugt, wenn bis zu einer Körnung von weniger als 8 mm zerkleinert wird, wobei bevorzugt mehr als 90 Gew%, besonders bevorzugt mehr als 95 Gew% und insbesondere mehr als 99 Gew% des zerkleinerten Materials eine entsprechende Körnung aufweisen. Durch eine derartige Zerkleinerung erreicht der Grünschnitt eine faserige Struktur, durch welche die positiven Eigenschaften des Grünschnitts besonders hervortreten. Dem Fachmann ist bekannt, dass eine mechanische Zerkleinerung nicht vollständig erfolgt und auch bei langanhaltender Zerkleinerung ein gewisser Rest des Materials nicht oder unvollständig zerkleinert wird, sodass dieser Rest eine größere Körnung aufweisen kann. Daher soll die Zerkleinerung soweit erfolgen, dass zumindest mehr als 90 Gew%, besonders bevorzugt mehr als 95 Gew% und insbesondere mehr als 99 Gew% des zerkleinerten Materials eine entsprechende Körnung von weniger als 8 mm, aufweisen.

Auch bei der mechanischen Zerkleinerung des Nutztiermists im Schritt e. ist es vorteilhaft, wenn bis zu einer Körnung von weniger als 8 mm zerkleinert wird, wobei bevorzugt mehr als 90 Gew%, besonders bevorzugt mehr als 95 Gew% und insbesondere mehr als 99 Gew% des zerkleinerten Materials eine entsprechende Körnung aufweisen. Durch eine derartige Zerkleinerung erreicht der Nutztiermist eine faserige Struktur, durch welche die positiven Eigenschaften des Nutztiermists besonders hervortreten. Dem Fachmann ist bekannt, dass eine mechanische Zerkleinerung nicht vollständig erfolgt und auch bei langanhaltender Zerkleinerung ein gewisser Rest des Materials nicht oder unvollständig zerkleinert wird, sodass dieser Rest eine größere Körnung aufweisen kann. Daher soll die Zerkleinerung soweit erfolgen, dass zumindest mehr als 90 Gew%, besonders bevorzugt mehr als 95 Gew% und insbesondere mehr als 99 Gew% des zerkleinerten Materials eine entsprechende Körnung von weniger als 8 mm aufweisen.

Das Mischverhältnis im Schritt i. liegt vorteilhafterweise im Wesentlichen bei 1 Volumenanteil Grünschnitt zu 1 Volumenanteil Nutztiermist zu 1 Volumenanteil Zellstoff (1 : 1 : 1).

Es kann vorteilhaft sein eine Vormischung des getrockneten und zerkleinerten Grünschnitts mit dem getrockneten und zerkleinerten Nutztiermist oder dem getrockneten und zerkleinerten strohhaltigen Nutztiermist durchzuführen. Für dieses Mischen wird der zerkleinerte und getrocknete Grünschnitt aus Schritt c. und der zerkleinerte und getrocknete Nutztiermist aus Schritt g. verwendet. Wird eine entsprechende Vormischung durchgeführt, so erfolgt in einem nachfolgenden Schritt eine abschließende homogene Durchmischung mit dem bereitgestellten Zellstoff. Das Mischverhältnis für die Vormischung liegt vorteilhafterweise im Wesentlichen bei 1 Volumenanteil Grünschnitt zu 1 Volumenanteil Nutztiermist (1 : 1).

Bezogen auf die Volumenanteile bedeutet im Wesentlichen, dass diese um weniger als 20 Vol%, bevorzugt um weniger als 10 Vol%, weiter bevorzugt um weniger als 5 Vol% und insbesondere bevorzugt um weniger als 1 Vol% voneinander abweichen. Die Volumenanteile können um weniger als 20 Vol%, 19 Vol%, 18 Vol%, 17 Vol%, 16 Vol%, 15 Vol%, 14 Vol%, 13 Vol%, 12 Vol%, 11 Vol%, 10 Vol%, 9 Vol%, 8 Vol%, 7 Vol%, 6 Vol%, 5 Vol%, 4 Vol%, 3 Vol%, 2 Vol% oder 1 Vol% voneinander abweichen. Insbesondere vorteilhaft ist es, wenn die Volumenanteile einander entsprechen.

Dem Fachmann sind verschiedene Mischmaschinen bekannt mit denen eine homogene Durchmischung der Materialien im Schritt i. und beim optionalen Vormischen erzielt werden kann. Beispielhaft aufgeführt seien hier Konusmischer, Trommelmischer, Zylindermischer, Wirbelschichtmischer oder Gasstrahlmischer.

Für das Endtrocknen in den Schritten c. und g. sind dem Fachmann eine Reihe von Trocknungsverfahren bekannt. Beispiele für geeignete Trocknungsverfahren sind Wirbelschichttrocknung, Fließbetttrocknung, Bandtrockner, Trommeltrockner, Schaufeltrockner, Trocknen bei Raumtemperatur, Trocknen im Trockenofen oder Trocknen im Trockenschrank. Auch eine Vakuumtrocknung ist möglich.

Die Trocknungstemperatur beim Endtrocknen in den Schritten c. und g. sollte dabei bevorzugt so gewählt sein, dass eventuell vorhandene Bakterien, Pilze und Viren vernichtet werden und eventuelle Medikamentenrückstände im Nutztiermist zersetzt werden, ohne dabei das zu trocknende Material zu beeinträchtigen.

In einer alternativen Ausführungsform ist das jeweilige Vortrocknen vor dem Zerkleinern obligatorisch, es erfolgt eine Vormischung des getrockneten und zerkleinerten Grünschnitts mit dem getrockneten und zerkleinerten Nutztiermist oder dem getrockneten und zerkleinerten strohhaltigen Nutztiermist vor dem Vermischen mit dem Zellstoff, und das Pflanzenkultursubstrat wird abschließend zu Matten, Briketts oder Pellets verpresst. Ein entsprechendes Verfahren umfasst die folgenden Schritte:
i. Bereitstellen von Grünschnitt,
ii. Vortrocknung bis zu einer Restfeuchte von 30 bis 50 Gew%,
iii. mechanische Zerkleinerung des Grünschnitts,
iv. Sieben des zerkleinerten Materials zum Abtrennen von Material mit einer Körnung von größer 8 mm,
v. Endtrocknung des zerkleinerten Materials bis zu einer Restfeuchte von maximal 15 Gew% zum Erhalten des getrockneten und zerkleinerten Grünschnitts,
vi. Bereitstellen von Nutztiermist,
vii. Vortrocknung bis zu einer Restfeuchte von maximal 30 Gew%,
viii. mechanische Zerkleinerung des Nutztiermists,
ix. bei strohhaltigem Pferdemist Vermischung der Exkrement-Anteile mit den Strohanteilen des mechanisch zerkleinerten Nutztiermists, und Aufmischen unter Bildung eines mattenförmigen Nutztiermistsubstrats,
x. Endtrocknung des mechanisch zerkleinerten Nutztiermists aus Schritt viii. oder dem mechanisch zerkleinerten strohhaltigen Nutztiermist aus Schritt ix. bis zu einer Restfeuchte von maximal 15 Gew% zum Erhalten des getrockneten und zerkleinerten Nutztiermists oder des getrockneten und zerkleinerten strohhaltigen Nutztiermists,
xi. Vermischen des getrockneten und zerkleinerten Grünschnitts aus Schritt e. mit dem getrockneten und zerkleinerten Nutztiermist oder dem getrockneten und zerkleinerten strohhaltigen Nutztiermist aus Schritt x.
xii. Bereitstellen von Zellstoff,
xiii. Zugabe des gemäß Schritt xii. bereitgestellten Zellstoffs zu der Mischung aus Schritt xi. und homogene Durchmischung zum Erhalten des Pflanzenkultursubstrats,
xiv. Verpressen des Pflanzenkultursubstrats aus Schritt xiii. zu Matten, Briketts oder Pellets, wobei der Nutztiermist bevorzugt Pferdemist ist.

Auch für das dem Vortrocknen sind dem Fachmann eine Reihe von Trocknungsverfahren bekannt. Beispiele für geeignete Trocknungsverfahren sind Wirbelschichttrocknung, Fließbetttrocknung, Bandtrockner, Trommeltrockner, Schaufeltrockner, Trocknen bei Raumtemperatur, Trocknen im Trockenofen oder Trocknen im Trockenschrank. Auch eine Vakuumtrocknung ist möglich.

Es kann vorteilhaft sein, dass der im Schritt a. bereitgestellte Grünschnitt bis zu einer Restfeuchte von 30 bis 50 Gew% vorgetrocknet wird, bevor er im Schritt b. mechanisch zerkleinert wird.

Bei einem zu hohen Feuchtigkeitsgehalt des im Schritt a. bereitgestellten Grünschnitts kann es zum Verstopfen der Maschinen während des mechanischen Zerkleinerns im Schritt b. kommen. Entsprechend kann eine Vortrocknung vorgesehen sein, um einen Feuchtigkeitsgehalt zu erlangen, bei dem eine effiziente mechanische Zerkleinerung erreicht werden kann.

Für den Grünschnitt hat sich gezeigt, dass ein Feuchtigkeitsgehalt von zwischen 20 Gew% und 60 Gew%, besonders bevorzugt von zwischen 30 und 50 Gew% zu einem effizienten Zerkleinern ohne Verstopfen der Maschine führt. Der Feuchtigkeitsgehalt des Grünschnitts vor dem Zerkleinerungsschritt in c. kann 20 Gew%, 25 Gew%, 30 Gew%, 31 Gew%, 32 Gew%, 33 Gew%, 34 Gew%, 35 Gew%, 36 Gew%, 37 Gew%, 38 Gew%, 39 Gew%, 40 Gew%, 41 Gew%, 42 Gew%, 43 Gew%, 44 Gew%, 45 Gew%, 46 Gew%, 47 Gew%, 48 Gew%, 49 Gew%, 50 Gew%, 55 Gew% oder 60 Gew% betragen.

Weist der Grünschnitt also einen höheren Feuchtigkeitsgehalt auf, durchläuft er einen Vortrocknungsschritt, um einen oben dargelegten Feuchtigkeitsgehalt (Restfeuchte) zu erreichen und damit einem Verstopfen der Maschinen während des Zerkleinerns entgegenzuwirken.

Bevorzugt liegt die Restfeuchte des Grünschnitts nach dem Vortrocknen bei 20 Gew% bis 60 Gew%, besonders bevorzugt bei 30 bis 50 Gew%. Die Restfeuchte des Grünschnitts kann nach dem Vortrocknen 20 Gew%, 25 Gew%, 30 Gew%, 31 Gew%, 32 Gew%, 33 Gew%, 34 Gew%, 35 Gew%, 36 Gew%, 37 Gew%, 38 Gew%, 39 Gew%, 40 Gew%, 41 Gew%, 42 Gew%, 43 Gew%, 44 Gew%, 45 Gew%, 46 Gew%, 47 Gew%, 48 Gew%, 49 Gew%, 50 Gew%, 55 Gew% oder 60 Gew% betragen.

In einer vorteilhaften Ausführungsform erfolgt die mechanische Zerkleinerung des Grünschnitts im Schritt c. durch einen Rotorhäcksler, der bevorzugt mit einem Rotor arbeitet, der sowohl Hämmer als auch Messer aufweist. Entsprechende Häcksler werden in der "Green Series" von der Firma TS Industrie GmbH (47906 Kempen, BRD) vertrieben. Hiermit kann in einfacher Weise die gewünschte Körung des Materials erreicht werden.

Vorteilhafterweise kann vorgesehen sein, dass das zerkleinerte Material aus Schritt b. vor der Endtrocknung in Schritt c. gesiebt wird zum Abtrennen von Material mit einer Körnung von 8 mm oder mehr, wobei das Sieben bevorzugt mit einem Trommelsieb oder einem Rüttelsieb erfolgt. Durch das Sieben wird verhindert, dass die Produktionsanlage durch zu große Stücke verstopft. Die zu großen Stücke gehen erneut zur Zerkleinerungsmaschine.

Dadurch kann im Schritt b. nicht oder unvollständig zerkleinerter Grünschnitt ausgesondert werden, wodurch gewährleistet wird, dass der zerkleinerte Grünschnitt eine Körnung von weniger als 8 mm aufweist bevor er der Endtrocknung im Schritt c. zugeführt wird. Bevorzugt weist mehr als 99 Gew%, besonders bevorzugt mehr als 99,9 Gew% und insbesondere mehr als 99,99 Gew% des zerkleinerten Grünschnitts nach dem Sieben eine Körnung von weniger als 8 mm auf.

Dem Fachmann sind diverse Siebe bekannt, die zum Sieben von zerkleinertem Grünschnitt verwendet werden können. Beim Rüttelsieb können auch mehrere Sätze von Sieben übereinander angeordnet sein, deren Maschenweite vom unteren Sieb zum oberen stets ansteigt. Beim Verfahren des Rüttelsiebens wird das Sieb/werden die Siebe in Schwingung versetzt. Dafür können unterschiedliche Siebmaschinen verwendet werden, wie beispielsweise Linear-Schwing-Siebmaschinen, Kreis-Schwing-Siebmaschinen, direkt-erregte Siebmaschinen, Spannwellen-Siebmaschinen oder Plan-Schwing-Siebmaschinen.

In einer weiteren vorteilhaften Ausführungsform erfolgt die Endtrocknung des zerkleinerten Grünschnitts im Schritt c. unter Zufuhr von Heißluft bei einer Temperatur von 140 bis 160°C und bevorzugt von 150°C, und/oder mittels eines Trommeltrockners (Zufuhr Heißluft von unten) oder eines Bandtrockners. Die Temperatur der Heißluft kann 140 °C, 141 °C, 142 °C, 143 °C, 144 °C, 145 °C, 146 °C, 147 °C, 148 °C, 149 °C, 150 °C, 151 °C, 152 °C, 153 °C, 154 °C, 155 °C, 156 °C, 157 °C, 158 °C, 159 °C oder 160 °C betragen. Bei einer solch hohen Temperatur können unerwünschte Bakterien und Pilze im zerkleinerten Grünschnitt abgetötet werden. Die Verwendung eines Trommel- oder Bandtrockners hat den Vorteil, dass in zeitsparender Weise eine gleichmäßige Trocknung des Materials erzielt wird. Ohne Rühren/Umwälzen beim Trocknen trocknet das Produkt nur oberflächig und ist im Inneren noch zu feucht.

Es ist vorteilhaft, wenn die Endtrocknung in Schritt c. in weniger als 6 Stunden, bevorzugt in weniger als 1 Stunde, weiter bevorzugt in weniger als 15 Minuten und insbesondere bevorzugt in weniger als 5 Minuten nach dem Zerkleinern in Schritt b. durchgeführt wird. Sofern das optionale Sieben durchgeführt wird, erfolgt die Endtrocknung in Schritt c. ebenfalls vorteilhafterweise in weniger als 6 Stunden, bevorzugt in weniger als 1 Stunde, weiter bevorzugt in weniger als 15 Minuten und insbesondere bevorzugt in weniger als 5 Minuten nach dem Sieben.

Durch ein möglichst unmittelbares Trocknen nach dem vorigen Verfahrensschritt soll gewährleistet werden, dass Zersetzungsprozesse gestoppt werden und der Grünschnitt somit seine vorteilhaften Eigenschaften beibehält.

Beim Endtrocknen in Schritt c. ist es weiterhin vorteilhaft, wenn die Heißluft nicht direkt an das Material geführt wird, da es ansonsten zu einem Verbrennen des Materials kommen kann. Dies kann beispielsweise dadurch erreicht werden, dass ein Abstandshalter und ein Lochblech verwendet werden, durch die ein Abstand zwischen dem zerkleinerten Grünschnitt und der Heißluft ermöglicht wird.

In einer weiteren Ausführungsform ist der im Schritt d. bereitgestellte Nutztiermist nicht älter als drei Wochen.

Bei solch frischem Nutztiermist ist noch keine nennenswerte Zersetzung eingetreten. Dadurch lässt sich das Material gut prozessieren und weist typischerweise einen sehr hohen Nährstoffgehalt auf.

Gemäß einer vorteilhaften Ausführungsform wird der im Schritt d. bereitgestellte Nutztiermist bis zu einer Restfeuchte von maximal 30 Gew% vorgetrocknet wird, bevor er im Schritt e. mechanisch zerkleinert wird, wobei die Vortrocknung bevorzugt durch Lagerung bei Raumtemperatur oder durch Trocknung in einem Bandtrockner erfolgt. Bei der Vortrocknung kann die Lagerung kann hier bis zu einem Jahr erfolgen.

Bei einem zu hohen Feuchtigkeitsgehalt des im Schritt d. bereitgestellten Nutztiermists kann es zum Verstopfen der Maschinen während des mechanischen Zerkleinerns im Schritt e. kommen. Entsprechend kann eine Vortrocknung vorgesehen sein, um einen Feuchtigkeitsgehalt zu erlangen, bei dem eine effiziente mechanische Zerkleinerung erreicht werden kann.

Für den Nutztiermist hat sich gezeigt, dass ein Feuchtigkeitsgehalt von höchstens 35 Gew%, insbesondere bevorzugt von höchstens 30 Gew% zu einem effizienten Zerkleinern ohne Verstopfen der Maschine führt. Der Feuchtigkeitsgehalt des Nutztiermists vor dem Zerkleinerungsschritt in e. kann höchstens 30 Gew%, 29 Gew%, 28 Gew%, 27 Gew%, 26 Gew%, 25 Gew%, 24 Gew%, 23 Gew%, 22 Gew%, 21 Gew%, 20 Gew%, 18 Gew% oder 16 Gew% betragen.

Weist der Nutztiermist also einen höheren Feuchtigkeitsgehalt auf, kann er einen Vortrocknungsschritt durchlaufen, um einen oben dargelegten Feuchtigkeitsgehalt (Restfeuchte) zu erreichen und damit einem Verstopfen der Maschinen während des Zerkleinerns entgegenzuwirken.

Bevorzugt liegt die Restfeuchte des Nutztiermists nach dem Vortrocknen bei höchstens 35 Gew%, insbesondere bevorzugt bei höchstens 30 Gew%. Die Restfeuchte des Nutztiermists kann nach dem Vortrocknen bei höchstens 30 Gew%, 29 Gew%, 28 Gew%, 27 Gew%, 26 Gew%, 25 Gew%, 24 Gew%, 23 Gew%, 22 Gew%, 21 Gew%, 20 Gew%, 18 Gew%, 17 Gew%, 16 Gew% oder 15 Gew% liegen.

Durch diese Trocknungsverfahren wird gewährleistet, dass die Trocknung nicht zu weit voranschreitet und der Nutztiermist verarbeitbar bleibt. Bevorzugt liegt die Restfeuchte nach dem Vortrocknen zwischen 15 und 30 Gew%, weiter bevorzugt zwischen 15 und 25 Gew%. Fällt die Restfeuchte unter 10 Gew% härten die Pferdeäpfel in ihrer ursprünglichen sphärischen Form aus und können in weiteren Verfahrensschritten nur schlecht oder gar nicht weiterverarbeitet werden.

In einer weiteren Ausführungsform erfolgt die mechanische Zerkleinerung des Nutztiermists im Schritt e. durch einen Strohhäcksler.

Vorteilhafterweise kann die Vermischung des zerkleinerten strohhaltigen Nutztiermists im Schritt f. und/oder die homogene Durchmischung im Schritt i. durch einen Konusmischer oder einen Trommelmischer erfolgen, wobei die homogene Durchmischung im Schritt i. bevorzugt bei einer Drehzahl von weniger als 1400 rpm erfolgt. Die Drehzahl kann weniger als 1400 rpm, 1300 rpm, 1200 rpm, 1100 rpm, 1000 rpm, 900 rpm, 800 rpm, 700 rpm, 600 rpm, 500 rpm, 400 rpm, 300 rpm, 200 rpm, 100 rpm, 90 rpm, 80 rpm, 70 rpm, 60 rpm, 50 rpm, 40 rpm, 30 rpm, 20 rpm oder 10 rpm betragen.

Durch diese geringe Drehzahl werden die Bestandteile schonend durchmischt und die strukturelle Integrität der einzelnen Materialien bleibt erhalten, sodass deren positive Eigenschaften aufrechterhalten werden.

Gemäß einer anderen Ausführungsform erfolgt die Endtrocknung des zerkleinerten Nutztiermists im Schritt g. bei einer Temperatur von 180 bis 200 °C und/oder erfolgt für eine Zeitdauer von mindestens 2 Stunden und/oder wird in einem Bandtrockner, einem Trockenofen oder einem Trockenschrank durchgeführt. Die Temperatur im Schritt g. kann somit 180 °C, 181 °C, 182 °C, 183 °C, 184 °C, 185 °C, 186 °C, 187 °C, 188 °C, 189 °C, 190 °C, 191 °C, 192 °C, 193 °C, 194 °C, 195 °C, 196 °C, 197 °C, 198 °C, 199 °C oder 200 °C betragen. Die Zeitdauer kann mindestens 2 Stunden, mindestens 3 Stunden, mindestens 4 Stunden oder mindestens 6 Stunden betragen.

Eine Trocknung bei solch hohen Temperaturen und für einen solch langen Zeitraum führt zum Vernichten von Bakterien, Pilzen und Viren sowie zur Zersetzung von Medikamentenrückständen im Nutztiermist. Dadurch wird zum einen die Lagerstabilität verbessert und zum anderen eine Kontamination mit Pathogenen vermieden.

Eine weitere vorteilhafte Ausführungsform sieht vor, dass der im Schritt h. bereitgestellte Zellstoff ein Faserzellstoff oder eine Zellstoffwatte ist.

Faserzellstoff liegen häufig Cellulosefasern zugrunde, die aus härteren Hölzern gewonnen werden, wohingegen die Cellulosefasern der Zellstoffwatte häufig aus weicheren Holzarten gewonnen werden.

In einer weiteren Ausführungsform kann vorgesehen sein, dass der Zellstoff so behandelt ist, dass er wasserabweisend ist. In dieser Form ist das Substrat als Dämmstoff geeignet.

Gemäß einer weiteren vorteilhaften Ausführungsform kann es vorgesehen sein, dass das Pflanzenkultursubstrat aus Schritt i. zu Matten, Briketts oder Pellets verpresst wird. Hierbei richtet sich der Bedarf der Verpressung beziehungsweise der resultierenden Form nach dem Anwendungsbereich des Pflanzenkultursubstrats. Bei der Verwendung als Dämmstoff wird eine Verpressung zu Matten bevorzugt.

Bei der Verpressung ist zu beachten, dass die Verpressung nicht zu stark ausfällt, da dies ansonsten die Saugfähigkeit des Pflanzenkultursubstrats mindern kann.

In einem weiteren Aspekt betrifft die Erfindung die Verwendung des erfindungsgemäßen Pflanzenkultursubstrats als
a. wasserspeicherndes und düngendes Torfersatzprodukt in der Landwirtschaft, im Gartenbau und/oder in der Forstwirtschaft, oder
b. als losen Baustoff für den Dammbau.

Ein bedeutender Vorteil des erfindungsgemäßen Pflanzenkultursubstrats liegt darin, dass es nicht nur dazu in der Lage ist Wasser zu speichern, sondern dem Boden auch Kohlenstoffverbindungen und potentielle Nährstoffe zugefügt werden. Somit stellt das erfindungsgemäße Pflanzenkultursubstrat ein ideales Kombinationserzeugnis für die Verwendung im Agrarbereich, im Forstwirtschaftsbereich sowie im Gartenbau dar.

Das Pflanzenkultursubstrat kann auch unter Material für den Dammbau gemischt werden und dient dann als zusätzliche Verstärkung dieses Damms. Trifft Wasser auf das Pflanzenkultursubstrat saugt es sich mit Wasser voll, wodurch eine Verdreifachung des Volumens erreicht werden kann. Weiterhin führt dies zu einem Verbinden des Pflanzenkultursubstrat untereinander, wodurch eine zusätzliche strukturelle Verstärkung erreicht werden kann. Die Dichte des Damms wird erhöht und wirkt dadurch zusätzlich stabilisierend. Es entsteht ein natürlicher Gegendruck, der die aufsteigenden Wassermassen zurückhalten kann.

In einem vierten Aspekt betrifft die Erfindung die Verwendung des zu Matten gepressten Pflanzenkultursubstrats als Dämmstoff wobei das Pflanzenkultursubstrat dann aus zerkleinertem und getrocknetem Grünschnitt und Zellstoff besteht. Damit ist der Dämmstoff entsprechend frei von Nutztiermist. Für diesen Zweck ist es vorgesehen, dass das Material mit einem Bindemittel (bevorzugt auf flüssiger polymerer Basis) so gebunden wird, dass damit formstabile Matten hergestellt werden können.

In einem fünften Aspekt betrifft die Erfindung ein zu Briketts oder Pellets verpresstes Pflanzenkultursubstrat umfassend:
a. Zerkleinerter und getrockneter Grünschnitt, und
b. zerkleinerter und getrockneter Nutztiermist,
wobei der Nutztiermist bevorzugt Pferdemist ist.

Ein zu Briketts oder Pellets verpresstes Pflanzenkultursubstrat umfassend zerkleinerter und getrockneter Grünschnitt, und zerkleinerter und getrockneter Nutztiermist hat sich als besonders gut entflammbar herausgestellt. Bevorzugt besteht das zu Briketts oder Pellets verpresste Pflanzenkultursubstrat im Wesentlichen aus zerkleinertem und getrocknetem Grünschnitt, und zerkleinertem und getrocknetem Nutztiermist. Besonders bevorzugt besteht das zu Briketts oder Pellets verpresste Pflanzenkultursubstrat ausschließlich aus zerkleinertem und getrocknetem Grünschnitt, und zerkleinertem und getrocknetem Pferdemist.

"Im Wesentlichen" bedeutet vorliegend, dass ein gewisser Teil des Pflanzenkultursubstrats aus weiteren Bestandteilen bestehen kann, wobei diese weniger als 10 Gew%, bevorzugt weniger als 5 Gew%, besonders bevorzugt weniger als 1 Gew% und insbesondere bevorzugt weniger 0,1 Gew% bezogen auf das Gesamtgewicht des Pflanzenkultursubstrats ausmachen. Beispiele für weitere Bestandteile können Additive, wie beispielsweise Zuschlagsstoffe, oder Verunreinigungen sein.

Das Mischverhältnis von zerkleinertem und getrocknetem Grünschnitt, und zerkleinertem und getrocknetem Nutztiermist liegt vorteilhafterweise im Wesentlichen bei 1 Volumenanteil Grünschnitt zu 1 Volumenanteil Nutztiermist (1 : 1).

Bezogen auf die Volumenanteile bedeutet im Wesentlichen, dass diese um weniger als 20 Vol%, bevorzugt um weniger als 10 Vol%, weiter bevorzugt um weniger als 5 Vol% und insbesondere bevorzugt um weniger als 1 Vol% voneinander abweichen. Die Volumenanteile können um weniger als 20 Vol%, 19 Vol%, 18 Vol%, 17 Vol%, 16 Vol%, 15 Vol%, 14 Vol%, 13 Vol%, 12 Vol%, 11 Vol%, 10 Vol%, 9 Vol%, 8 Vol%, 7 Vol%, 6 Vol%, 5 Vol%, 4 Vol%, 3 Vol%, 2 Vol% oder 1 Vol% voneinander abweichen. Insbesondere vorteilhaft ist es, wenn die Volumenanteile einander entsprechen.

In einem sechsten Aspekt betrifft die Erfindung die Verwendung des zu Pellets oder Briketts gepressten Pflanzenkultursubstrats als Brennstoff. Der Brennwert entspricht hier Standard-Holzpellets, wobei durch die offenere Struktur eine erhöhte Zugänglichkeit für Sauerstoff resultiert.

Die Herstellung gängiger Brennstoffe ist häufig mit großen CO₂-Emissionen verbunden. Dagegen werden für das erfindungsgemäße Pflanzenkultursubstrat größtenteils nachhaltige Ressourcen verwendet, wobei deren Verarbeitung zum Pflanzenkultursubstrat mit geringen CO₂-Emissionen einhergeht.

In einem siebten Aspekt betrifft die Erfindung die Verwendung des Substrats als Maßnahme zur Düngemittelzufuhr, wenn dem Substrat Düngemittel zugegeben werden. Hierdurch kann über die Ausbringung des Substrats als Bodenhilfsstoff nicht nur die Bodeneigenschaften verbessert werden, sondern auch die Düngemittelzufuhr in den Boden erreicht werden.

In einem achten Aspekt betrifft die Erfindung die Verwendung als Träger von Saatgut. Nach Beimischung von Saatgut (z.B. für bodenbedeckende Grünpflanzen oder Kulturpflanzen), kann das Substrat, z.B. in Mattenform, wie beispielsweise als Vliesmatte, auf den Boden aufgebracht oder aufgerollt werden und als Saatunterlage für Bodenbegrünung oder die Anzucht von Kulturpflanzen diesen. In dieser Funktion kann das Substrat zu Ansaat von Kulturpflanzen oder als Maßnahme zum Erosionsschutz eingesetzt werden. Zur chemischen Verfestigung der Vliesmatte können natürliche Bindemittel wie Baumharze, natürliche Latexemulsionen, stärkebasierte Bindemittel, Proteinbasierte Bindemittel (z.B. aus Soja oder Casein) oder Bindemittel auf Cellulosebasis verwendet werden. Als Bindemittel wird hierbei bevorzugt ein flüssiges Bindemittel eingesetzt. Das flüssige Bindemittel kann auf verschiedene Arten auf das Vlies aufgebracht werden, so bspw. durch (Tauch-)Imprägnierung, Besprühen, Minimalauftrag über eine Übertragungswalze, oder durch Binderdruck.

### Darstellung der betreffenden Technologie in Form von Aspekten 1 bis 26

Verschiedene Beispiele für Aspekte der Offenbarung werden der Einfachheit halber als nummerierte Aspekte (1, 2, 3 usw.) beschrieben. Diese dienen lediglich als Beispiele und schränken die betreffende Technologie nicht ein. Die Bezeichnungen der Abbildungen und Referenznummern dienen lediglich als Beispiele und zur Veranschaulichung, und die Aspekte sind nicht durch diese Bezeichnungen eingeschränkt.
Aspekt 1: Pflanzenkultursubstrat umfassend:
   a. Zerkleinerter und getrockneter Grünschnitt,
   b. Zerkleinerter und getrockneter Nutztiermist, und
   c. Zellstoff,
   wobei der Nutztiermist ausgewählt ist aus der Gruppe bestehend aus Rindermist, Pferdemist, Schweinemist, Schafsmist und Ziegenmist oder Mischungen hiervon.
Aspekt 2: Pflanzenkultursubstrat gemäß Aspekt 1, **dadurch gekennzeichnet, dass** der Grünschnitt ein nicht-kompostierter Grünschnitt ist und ausgewählt ist aus der Gruppe bestehend aus Grasschnitt, Laub, Gehölz, Heckenschnitt und Kombinationen hieraus.
Aspekt 3: Pflanzenkultursubstrat gemäß Aspekt 1 oder 2, **dadurch gekennzeichnet, dass** der zerkleinerte und getrocknete Grünschnitt und/oder der zerkleinerte und getrocknete Pferdemist eine Restfeuchte von maximal 15 Gew% und/oder eine Körnung von weniger als 8 mm aufweisen.
Aspekt 4: Pflanzenkultursubstrat gemäß Aspekt 1 bis 3, **dadurch gekennzeichnet, dass** der Pferdemist entweder ein strohhaltiger Pferdemist oder ein Pferdemist ohne Strohanteil ist.
Aspekt 5: Pflanzenkultursubstrat gemäß einem der vorangehenden Aspekte 1 bis 4, **dadurch gekennzeichnet, dass** der Zellstoff ein nördlicher gebleichter Langfaser-Sulfatzellstoff (NBSK-Zellstoff) ist und eine Faserlänge von zwischen 4 und 20 mm hat.
Aspekt 6: Pflanzenkultursubstrat gemäß einem der Aspekte 1 bis 5, **dadurch gekennzeichnet, dass** die drei Mischungskomponenten zerkleinerter und getrockneter Grünschnitt; zerkleinerter und getrockneter Nutztiermist und Zellstoff im Wesentlichen gleiche Volumenanteile haben.
Aspekt 7: Pflanzenkultursubstrat gemäß einem der Aspekte 1 bis 6, **dadurch gekennzeichnet, dass** es zusätzlich Algen und/oder ein Hydrogel bildendes Polymer aufweist, wobei das Hydrogel bildendes Polymer ein natürliches und/oder synthetisches, vernetztes und/oder teilvernetztes Polymer und/oder Copolymer ist.
Aspekt 8: Pflanzenkultursubstrat gemäß einem der Aspekte 1 bis 7, **dadurch gekennzeichnet, dass** es zusätzlich ein oder mehrere Düngemittel zur Erhöhung des Pflanzennährstoffgehalts aufweist.
Aspekt 9: Pflanzenkultursubstrat gemäß einem der Aspekte 1 bis 8, **dadurch gekennzeichnet, dass** es zusätzlich Saatgut aufweist, bevorzugt zur Ansaat von Bodenbegrünung oder zur Ansaat von Kulturpflanzen.
Aspekt 10: Pflanzenkultursubstrat gemäß einem der Aspekte 1 bis 9, **dadurch gekennzeichnet, dass** das Pflanzenkultursubstrat zu Pellets, Briketts oder Matten verpresst wird.
Aspekt 11: Verfahren zur Herstellung eines Pflanzenkultursubstrats gemäß einem der Aspekte 1 bis 10 umfassend die folgenden Schritte:
   a. Bereitstellen von Grünschnitt,
   b. mechanische Zerkleinerung des Grünschnitts,
   c. Endtrocknung des zerkleinerten Materials bis zu einer Restfeuchte von maximal 15 Gew% zum Erhalten des getrockneten und zerkleinerten Grünschnitts,
   d. Bereitstellen von Nutztiermist
   e. mechanische Zerkleinerung des Nutztiermists,
   f. Bei strohhaltigem Nutztiermist Vermischung der Exkrement-Anteile mit den Strohanteilen des mechanisch zerkleinerten Nutztiermists, und Aufmischen unter Bildung eines mattenförmigen Nutztiermistsubstrats,
   g. Endtrocknung des mechanisch zerkleinerten Nutztiermists aus Schritt e. oder dem mechanisch zerkleinerten strohhaltigen Nutztiermist aus Schritt f. bis zu einer Restfeuchte von maximal 15 Gew% zum Erhalten des getrockneten und zerkleinerten Nutztiermists oder des getrockneten und zerkleinerten strohhaltigen Nutztiermists,
   h. Bereitstellen von Zellstoff,
   i. Vermischen des getrockneten und zerkleinerten Grünschnitts aus Schritt c. mit dem getrockneten und zerkleinerten Nutztiermist oder dem getrockneten und zerkleinerten strohhaltigen Nutztiermist aus Schritt g. und dem Zellstoff aus Schritt h. und homogene Durchmischung zum Erhalten des Pflanzenkultursubstrats, wobei optional zusätzlich Algen und/oder ein Hydrogel bildendes Polymer hinzugegeben werden,
      wobei der Nutztiermist bevorzugt Pferdemist ist.
Aspekt 12: Verfahren gemäß Aspekt 11, **dadurch gekennzeichnet, dass** der im Schritt a. bereitgestellte Grünschnitt bis zu einer Restfeuchte von 30 bis 50 Gew% vorgetrocknet wird, bevor er im Schritt b. mechanisch zerkleinert wird.
Aspekt 13: Verfahren gemäß einem der Aspekte 11 oder 12, **dadurch gekennzeichnet, dass** die mechanische Zerkleinerung des Grünschnitts im Schritt b. durch ein Schneidwerkzeug mit Hammermühle erfolgt.
Aspekt 14: Verfahren gemäß Aspekt 11 bis 13, **dadurch gekennzeichnet, dass** das zerkleinerte Material aus Schritt b. vor der Endtrocknung in Schritt c. gesiebt wird zum Abtrennen von Material mit einer Körnung von 8 mm oder mehr, wobei das Sieben bevorzugt mit einem Trommelsieb oder einem Rüttelsieb erfolgt.
Aspekt 15: Verfahren gemäß einem der Aspekte 11 bis 14, **dadurch gekennzeichnet, dass** die Endtrocknung des zerkleinerten Grünschnitts im Schritt c. unter Zufuhr von Heißluft bei einer Temperatur von 140 bis 160°C und bevorzugt von 150°C erfolgt, und/oder mittels eines Trommeltrockners unter Zufuhr der Heißluft von unten oder eines Bandtrockners erfolgt.
Aspekt 16: Verfahren gemäß einem der Aspekte 11 bis 15, **dadurch gekennzeichnet, dass** der im Schritt d. bereitgestellte Nutztiermist nicht älter als drei Wochen ist.
Aspekt 17: Verfahren gemäß einem der Aspekte 11 bis 16, **dadurch gekennzeichnet, dass** der im Schritt d. bereitgestellte Nutztiermist bis zu einer Restfeuchte von maximal 30 Gew% vorgetrocknet wird, bevor er im Schritt e. mechanisch zerkleinert wird, wobei die Vortrocknung bevorzugt durch Lagerung bei Raumtemperatur oder durch Trocknung in einem Bandtrockner erfolgt.
Aspekt 18: Verfahren gemäß einem der Aspekte 11 bis 17, **dadurch gekennzeichnet, dass** die mechanische Zerkleinerung des Nutztiermists im Schritt e. durch einen Strohhäcksler erfolgt.
Aspekt 19: Verfahren gemäß einem der Aspekte 11 bis 18, **dadurch gekennzeichnet, dass** die Vermischung des zerkleinerten strohhaltigen Nutztiermists im Schritt f. und/oder die homogene Durchmischung im Schritt i. durch einen Konusmischer oder einen Trommelmischer erfolgt, wobei die homogene Durchmischung im Schritt i. bevorzugt bei einer Drehzahl von weniger als 1400 rpm und bevorzugt bei 600 bis 800 rpm erfolgt.
Aspekt 20: Verfahren gemäß einem der Aspekte 11 bis 19, **dadurch gekennzeichnet, dass** die Endtrocknung des zerkleinerten Nutztiermists im Schritt g. bei einer Temperatur von 180 bis 200°C und/oder für eine Zeitdauer von mindestens 2 Stunden erfolgt und/oder in einem Bandtrockner, einem Trockenofen oder einem Trockenschrank durchgeführt wird.
Aspekt 21: Verfahren gemäß einem der Aspekte 11 bis 20, **dadurch gekennzeichnet, dass** der im Schritt h. bereitgestellte Zellstoff ein Faserzellstoff oder eine Zellstoffwatte ist.
Aspekt 22: Verfahren gemäß einem der Aspekte 11 bis 21, **dadurch gekennzeichnet, dass** das Pflanzenkultursubstrats aus Schritt i. zu Matten, Briketts oder Pellets verpresst wird.
Aspekt 23: Verwendung eines Pflanzenkultursubstrats gemäß einem der Aspekte 1 bis 10 als
   a. wasserspeicherndes und düngendes Torfersatzprodukt in der Landwirtschaft, im Gartenbau und/oder in der Forstwirtschaft, oder
   b. als losen Baustoff für den Dammbau.
Aspekt 24: Verwendung eines gemäß Aspekt 10 zu Matten gepressten Pflanzenkultursubstrats als Dämmstoff, wobei das Pflanzenkultursubstrat dann aus zerkleinertem und getrocknetem Grünschnitt und Zellstoff besteht.
Aspekt 25: Zu Briketts oder Pellets verpresstes Pflanzenkultursubstrat umfassend:
   a. Zerkleinerter und getrockneter Grünschnitt, und
   b. zerkleinerter und getrockneter Nutztiermist,
      wobei der Nutztiermist bevorzugt Pferdemist ist.
Aspekt 26: Verwendung eines Pflanzenkultursubstrats gemäß Aspekt 25 als Brennstoff.

### Definitionen

Unter dem Begriff **Körnung** versteht man die Größe von Partikeln. Die Körnung beschreibt dabei die maximale räumliche Ausdehnung eines dreidimensionalen Körpers. Das heißt, dass ein Partikel mit einer Körnung von weniger als 8 mm ein Sieb mit einer Maschenweite von 8 mm passiert.

### Ausführungsbeispiele

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### 1. Beschreibung des Herstellungsverfahrens anhand eines Fließbildes

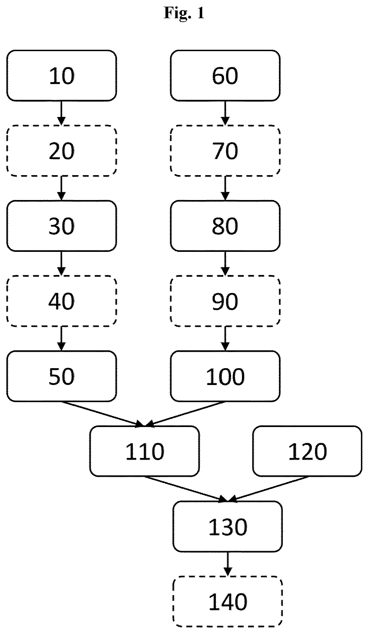

In Figur 1 ist ein erfindungsgemäßes Verfahren zur Herstellung des Pflanzenkultursubstrats als Fließdiagramm schematisch dargestellt. Ausgehend vom Grünschnitt 10 kann abhängig von dessen Feuchtigkeitsgehalt der optionale Schritt der Vortrocknung 20 vorgesehen sein. Im Schritt 30 erfolgt die mechanische Zerkleinerung des Grünschnitts mit einem Rotorhäcksler, der mit einem Rotor arbeitet, der sowohl Hämmer als auch Messer aufweist (z.B. Premium P der Forma TI Industrie GmbH) auf eine Größe von maximal 8 mm. Optional kann ein Sieben 40 des zerkleinerten Grünschnitts vorgesehen sein, um Material mit einer Körnung von 8 mm oder größer zu entfernen. Abschließend erfolgt die Endtrocknung 50 des zerkleinerten Grünschnitts auf eine Restfeuchte von maximal 15 Gew% zum Erhalten des getrockneten und zerkleinerten Grünschnitts. Ausgehend vom Pferdemist 60 kann abhängig von dessen Feuchtigkeitsgehalt der optionale Schritt der Vortrocknung 70 vorgesehen sein. Im Schritt 80 erfolgt die mechanische Zerkleinerung des Pferdemists mittels eines Strohhäckslers auf eine Größe von maximal 8 mm. Soll strohhaltiger Pferdemist verwendet werden, so erfolgt im Schritt 90 das Vermischen des zerkleinerten Pferdemists mit zerkleinertem Stroh. Abschließend erfolgt die Endtrocknung 100 des zerkleinerten Pferdemists auf eine Restfeuchte von maximal 15 Gew% zum Erhalten des getrockneten und zerkleinerten Pferdemists. In Schritt 110 erfolgt das Durchmischen des getrockneten und zerkleinerten Grünschnitts mit dem getrockneten und zerkleinerten Pferdemist zu gleiche Volumenanteilen mittels eines Konusmischers. Nachfolgend wird der Zellstoff 120 mit dem in Schritt 110 durchmischten getrockneten und zerkleinerten Grünschnitt und dem getrockneten und zerkleinerten Pferdemist erneut zu gleichen Volumenanteilen durchgemischt 130 um das erfindungsgemäße Pflanzenkultursubstrat zu erhalten. Im optionalen Schritt 140 kann das Pflanzenkultursubstrat aus Schritt 130 zu Matten, Briketts oder Pellets verpresst werden.

## Patentansprüche

1. Pflanzenkultursubstrat umfassend:
a. Zerkleinerter und getrockneter Grünschnitt,
b. Zerkleinerter und getrockneter Nutztiermist, und
c. Zellstoff,
wobei der Nutztiermist ausgewählt ist aus der Gruppe bestehend aus Rindermist, Pferdemist, Schweinemist, Schafsmist und Ziegenmist oder Mischungen hiervon.

2. Pflanzenkultursubstrat gemäß Anspruch 1, **dadurch gekennzeichnet, dass** der zerkleinerte und getrocknete Grünschnitt und/oder der zerkleinerte und getrocknete Pferdemist eine Restfeuchte von maximal 15 Gew% und/oder eine Körnung von weniger als 8 mm aufweisen.

3. Pflanzenkultursubstrat gemäß einem der vorangehenden Ansprüche, **dadurch gekennzeichnet, dass** der Zellstoff ein nördlicher gebleichter Langfaser-Sulfatzellstoff (NBSK-Zellstoff) ist und eine Faserlänge von zwischen 4 und 20 mm hat.

4. Pflanzenkultursubstrat gemäß einem der vorangehenden Ansprüche, **dadurch gekennzeichnet, dass** die drei Mischungskomponenten zerkleinerter und getrockneter Grünschnitt; zerkleinerter und getrockneter Nutztiermist und Zellstoff im Wesentlichen gleiche Volumenanteile haben.

5. Pflanzenkultursubstrat gemäß einem der vorangehenden Ansprüche, **dadurch gekennzeichnet, dass** es zusätzlich Algen und/oder ein Hydrogel bildendes Polymer aufweist, wobei das Hydrogel bildendes Polymer ein natürliches und/oder synthetisches, vernetztes und/oder teilvernetztes Polymer und/oder Copolymer ist.

6. Pflanzenkultursubstrat gemäß einem der vorangehenden Ansprüche, **dadurch gekennzeichnet, dass** es zusätzlich ein oder mehrere Düngemittel zur Erhöhung des Pflanzennährstoffgehalts aufweist.

7. Pflanzenkultursubstrat gemäß einem der vorangehenden Ansprüche, **dadurch gekennzeichnet, dass** es zusätzlich Saatgut aufweist, bevorzugt zur Ansaat von Bodenbegrünung oder zur Ansaat von Kulturpflanzen.

8. Pflanzenkultursubstrat gemäß einem der vorangehenden Ansprüche, **dadurch gekennzeichnet, dass** das Pflanzenkultursubstrat zu Pellets, Briketts oder Matten verpresst wird.

9. Verfahren zur Herstellung eines Pflanzenkultursubstrats gemäß einem der vorangehenden Ansprüche umfassend die folgenden Schritte:
a. Bereitstellen von Grünschnitt,
b. mechanische Zerkleinerung des Grünschnitts,
c. Endtrocknung des zerkleinerten Materials bis zu einer Restfeuchte von maximal 15 Gew% zum Erhalten des getrockneten und zerkleinerten Grünschnitts,
d. Bereitstellen von Nutztiermist
e. mechanische Zerkleinerung des Nutztiermists,
f. Bei strohhaltigem Nutztiermist Vermischung der Exkrement-Anteile mit den Strohanteilen des mechanisch zerkleinerten Nutztiermists, und Aufmischen unter Bildung eines mattenförmigen Nutztiermistsubstrats,
g. Endtrocknung des mechanisch zerkleinerten Nutztiermists aus Schritt e. oder dem mechanisch zerkleinerten strohhaltigen Nutztiermist aus Schritt f. bis zu einer Restfeuchte von maximal 15 Gew% zum Erhalten des getrockneten und zerkleinerten Nutztiermists oder des getrockneten und zerkleinerten strohhaltigen Nutztiermists,
h. Bereitstellen von Zellstoff,
i. Vermischen des getrockneten und zerkleinerten Grünschnitts aus Schritt c. mit dem getrockneten und zerkleinerten Nutztiermist oder dem getrockneten und zerkleinerten strohhaltigen Nutztiermist aus Schritt g. und dem Zellstoff aus Schritt h. und homogene Durchmischung zum Erhalten des Pflanzenkultursubstrats, wobei optional zusätzlich Algen und/oder ein Hydrogel bildendes Polymer hinzugegeben werden,
wobei der Nutztiermist bevorzugt Pferdemist ist.

10. Verfahren gemäß Anspruch 9, **dadurch gekennzeichnet, dass** der im Schritt a. bereitgestellte Grünschnitt bis zu einer Restfeuchte von 30 bis 50 Gew% vorgetrocknet wird, bevor er im Schritt b. mechanisch zerkleinert wird.

11. Verfahren gemäß einem der Ansprüche 9 oder 10, **dadurch gekennzeichnet, dass** das Pflanzenkultursubstrats aus Schritt i. zu Matten, Briketts oder Pellets verpresst wird.

12. Verwendung eines Pflanzenkultursubstrats gemäß einem der Ansprüche 1 bis 8 als
a. wasserspeicherndes und düngendes Torfersatzprodukt in der Landwirtschaft, im Gartenbau und/oder in der Forstwirtschaft, oder
b. als losen Baustoff für den Dammbau.

13. Verwendung eines gemäß Anspruch 8 zu Matten gepressten Pflanzenkultursubstrats als Dämmstoff, wobei das Pflanzenkultursubstrat dann aus zerkleinertem und getrocknetem Grünschnitt und Zellstoff besteht.

14. Zu Briketts oder Pellets verpresstes Pflanzenkultursubstrat umfassend:
a. Zerkleinerter und getrockneter Grünschnitt, und
b. zerkleinerter und getrockneter Nutztiermist,
wobei der Nutztiermist bevorzugt Pferdemist ist;
und wobei das Pflanzenkultursubstrat bevorzugt ein Pflanzenkultursubstrat gemäß Anspruch 8 ist.

15. Verwendung eines Pflanzenkultursubstrats gemäß Anspruch 14 als Brennstoff.
